# EUROPEAN PATENT APPLICATION

(11) **EP 3 579 365 A1**
(43) Date of publication of application: **11.12.2019**
(21) Application number: 18748416.7
(22) Date of filing: 01.02.2018
(51) Int. Cl.: H02H 3/02, H02J 13/00

(54) **PROTECTION RELAY APPARATUS**

(30) Priority: 06.02.2017 JP 2017019701
(71) Applicant: KABUSHIKI KAISHA TOSHIBA, Minato-ku Tokyo 105-8001 (JP); Toshiba Energy Systems & Solutions Corporation, Kawasaki-shi, Kanagawa 212-0013 (JP)
(72) Inventor: TANAKA, Shintaro, Tokyo 105-8001 (JP); TANG, Xiaojiao, Tokyo 105-8001 (JP)
(74) Representative: Henkel & Partner mbB
(86) International application number: PCT/JP2018/003417
(87) International publication number: WO 2018/143349

(57) **Abstract**

The protection relay apparatus according to an embodiment has a first unit and a second unit. The first unit has a first power information input unit, a control unit, a first control information output unit, and a first communication unit. The second unit has a second power information input unit, a second control information output unit, and a second communication unit. First power information relating to power measured at a location corresponding to a first breaker included among a plurality of breakers is inputted into the first power information input unit. On the basis of the first power information inputted into the first power information input unit and the second power information received by the first communication unit, the control unit of the first unit generates first control information to be outputted to the first control information output unit and causes the first control information output unit to output the first control information, and generates second control information to be outputted to the second control information output unit and transmits the second control information to the second unit using the first communication unit.

## Description

### [Technical Field]

An embodiment of the present invention relates to a protection relay apparatus.

### [Background Art]

Breakers are provided in a power system, in which power generated by a power generation plant is supplied to consumers, to protect various locations. The breakers are controlled by a protection relay apparatus. In the related art, the breakers are not controlled in an integrated manner on the basis of the power at a plurality of locations.

### [Citation List]

### [Patent Literature]

[Patent Literature 1]
Japanese Unexamined Patent Application, First Publication No. 2016-63586

### [Summary of Invention]

### [Technical Problem]

An object of the present invention is to provide a protection relay apparatus capable of controlling a breaker by monitoring a power transmission facility in an integrated manner.

### [Solution to Problem]

A protection relay apparatus of an embodiment includes a first unit and a second unit. The protection relay apparatus controls each of a plurality of breakers provided in a plurality of locations in a power transmission facility for transmitting power. The first unit includes a first power information input unit, a control unit, a first control information output unit, and a first communication unit. The second unit includes a second power information input unit, a second control information output unit, and a second communication unit. The first power information input unit receives first power information on power measured at a location corresponding to a first breaker included in the plurality of breakers. The control unit generates control information for each of the plurality of breakers. The first control information output unit outputs first control information for the first breaker among the control information to the first breaker. The first communication unit communicates with the second unit. The second power information input unit receives second power information on power measured at a location corresponding to a second breaker included in the plurality of breakers. The second control information output unit outputs second control information for the second breaker among the control information to the second breaker. The second communication unit communicates with the first unit and transmits the second power information input to the second power information input unit to the first unit. The control unit of the first unit generates the first control information, which is output to the first control information output unit, and outputs the first control information to the first control information output unit on the basis of the first power information input to the first power information input unit and the second power information received by the first communication unit, generates the second control information, which is output to the second control information output unit, and transmits the second control information to the second unit by using the first communication unit.

### [Brief Description of Drawings]

Fig. 1 is a configuration diagram of a power system 1 using a protection relay apparatus 10 of a first embodiment.
Fig. 2 is a configuration diagram of the protection relay apparatus 10 of the first embodiment.
Fig. 3 is a configuration diagram illustrating a control unit 105 of the protection relay apparatus 10 of the first embodiment.
Fig. 4 is a flowchart illustrating the flow of processing performed by the control unit 105 of the protection relay apparatus 10 of the first embodiment.
Fig. 5 is a configuration diagram of a protection relay apparatus 10A of a second embodiment.
Fig. 6 is a configuration diagram of a protection relay apparatus 10B of a third embodiment.
Fig. 7 is a configuration diagram of a protection relay apparatus 10C of a fourth embodiment.
Fig. 8 is a configuration diagram of a protection relay apparatus 10D of a fifth embodiment.

### [Description of Embodiments]

Hereinafter, protection relay apparatuses of embodiments will be described with reference to the drawings.

### (First embodiment)

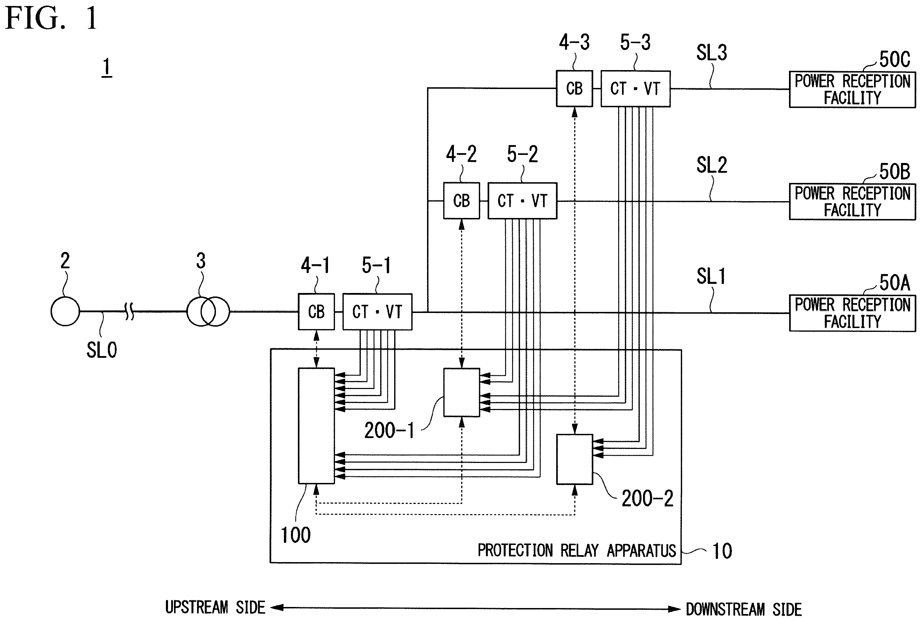

Firstly, a first embodiment will be described. Fig. 1 is a configuration diagram of a power system 1 using a protection relay apparatus 10 of the first embodiment. The power system 1, for example, includes a power generator 2, a transformer 3, a plurality of breakers 4-1 to 4-3 (referred to as "CB" in Fig. 1), a plurality of instrument conversion units 5-1 to 5-3 (an example of measuring units) (referred to as "CT·VT" in Fig. 1), a protection relay apparatus 10, and power transmission lines SL0 to SL3. The power system 1 supplies power generated by the power generator 2 to consumer's power reception facilities 50A to 50C. In the following description, when the plurality of breakers are not distinguished from one another, they are simply referred to as the "breaker 4". Furthermore, when the instrument conversion units 5-1 to 5-3 are not distinguished from one another, they are simply referred to as the "instrument conversion unit 5". Furthermore, when the plurality of power transmission lines SL0 to SL3 are not distinguished from one another, they are simply referred to as the "power transmission line SL". Furthermore, the following description will be given on the assumption that in the power system 1, a side close to the power generator 2 is referred to as an "upstream side" and a side close to the power reception facilities 50A to C is referred to as a "downstream side".

The power generator 2 generates power from thermal power, hydroelectric power, nuclear power and the like. The power generated by the power generator 2 is transmitted via the power transmission line SL. In general, in order to minimize path loss, power of a high voltage (for example, 275 [kV], 500 [kV] and the like) is transmitted from a mountainous area and the like, where the power generator 2 is located, to the vicinity of place where each of the consumer's power reception facilities 50A to 50C is installed. The transformer 3 converts the power transmitted to the vicinity of the consumer into a voltage suitable for each of the consumer's power reception facilities 50A to 50C.

The power transmission line SL, for example, is an example of a power transmission facility having a structure that branches from the upstream side to the downstream side. In the example of Fig. 1, the power generator 2 and the transformer 3 are connected to each other by the power transmission line SL0 and the power generated by the power generator 2 is transmitted to the transformer 3 by the power transmission line SL0. Furthermore, the transformer 3 and the consumer's power reception facility 50A are connected to each other by the power transmission line SL1 and the power transformed by the transformer 3 is transmitted to the power reception facility 50A by the power transmission line SL1. Furthermore, the transformer 3 and the power reception facility 50B are connected to each other by the power transmission line SL2 and the power transformed by the transformer 3 is transmitted to the power reception facility 50B by the power transmission line SL2. Furthermore, the transformer 3 and the power reception facility 50C are connected to each other by the power transmission line SL3 and the power transformed by the transformer 3 is transmitted to the power reception facility 50C by the power transmission line SL3.

Furthermore, the power transmitted by the power transmission line SL, for example, is three-phase AC power. The power transmission line SL includes three power lines for transmitting phases U, V, and W of the three-phase AC power and transmits the power of each phase.

The breakers 4 are provided in a plurality of locations on the power transmission line SL. In the example of Fig. 1, the breaker 4-1 is provided between the transformer 3 and the power reception facility 50A, the breaker 4-2 is provided between the transformer 3 and the power reception facility 50B, and the breaker 4-3 is provided between the transformer 3 and the power reception facility 50C. The breaker 4, for example, is provided for each phase of three-phase AC. On the basis of control information from the protection relay apparatus 10, the breaker 4 can allow a location, where the breaker 4 is installed on the power transmission line, to be in a cut-off state or an energized state for each phase or for three phases. When the breaker 4 is in the cut-off state, the facility on the downstream side from the location, where the breaker 4 is installed on the power transmission line, is in a state in which no power is supplied. On the other hand, when the breaker 4 is in the energized state, power is supplied to the facility on the downstream side from the location where the breaker 4 is installed on the power transmission line.

The instrument conversion unit 5 acquires a voltage value and a current value in the vicinity (an example of a location corresponding to the breaker 4) where the breaker 4 of the power transmission line SL is installed, and outputs information indicating the acquired voltage value and current value to a unit corresponding to the protection relay apparatus 10. The instrument conversion unit 5 measures a voltage of power at the location corresponding to the breaker 4 by dropping the voltage by an instrument transformer (not illustrated). This is because, in general, a voltage of the power transmitted by the power transmission line SL is not great to be suitable for the measurement as is. Furthermore, the instrument conversion unit 5 measures a current of power at the location corresponding to the breaker 4 by converting the current to a small current using an instrument current transformer (not illustrated). This is because, in general, a current of the power transmitted by the power transmission line SL is not great to be suitable for the measurement as is, similarly to the case of the voltage. In addition, the instrument conversion unit 5 performs analog-to-digital (AD) conversion for the acquired voltage value and current value as needed. The voltage value and the current value acquired by the instrument conversion unit 5 are an example of "power information on power".

The protection relay apparatus 10 controls each of the plurality of breakers 4. The protection relay apparatus 10 includes a base unit 100 and extension units 200-1 and 200-2. In the following description, when the extension units 200-1 and 200-2 are not distinguished from each other, they are simply referred to as the "extension unit 200". In the example of Fig. 1, the protection relay apparatus 10 includes the plurality of extension units 200-1 and 200-2; however, the present invention is not limited thereto. It is sufficient if the protection relay apparatus 10 includes the base unit 100 and at least one extension unit 200. The base unit 100 is an example of a "first unit". Furthermore, the extension unit 200 is an example of a "second unit".

The protection relay apparatus 10 receives the power information acquired by the instrument conversion unit 5. A part of the power information acquired by the instrument conversion unit 5 is input to the base unit 100. Furthermore, in the power information acquired by the instrument conversion unit 5, remaining power information, which is not input to the base unit 100, is input to the extension unit 200-1 or 200-2. In the power information acquired by the instrument conversion unit 5, power information to be input to a unit may be arbitrarily determined depending on the installation position of each unit, the number of pieces of power information that can be input to each unit, and the like.

The base unit 100 communicates with the extension unit 200 and receives power information input to the extension unit 200. The base unit 100 generates control information for each of the plurality of breakers 4 on the basis of power information input to the base unit 100 itself and the power information received from the extension unit 200. For example, in order to generate the control information for controlling the breaker 4 (for example, the breaker 4-1), the base unit 100 uses power information from the instrument conversion unit 5-1 corresponding to the breaker 4-1 and power information from the instrument conversion unit 5-2 corresponding to the breaker 4 (for example, the breaker 4-2) installed on the downstream side of the breaker 4-1. In addition, a processing unit for the power information required for generating control information for the breaker 4 is also referred to as a "bay". In addition, the instrument conversion unit 5 may be provided at a location (that is, in the middle and the like between two breakers 4) corresponding to the bay, instead of a location corresponding to the breaker 4.

The base unit 100 outputs a part of the generated control information to the breaker 4 from its own control information input/output unit 102. Furthermore, the base unit 100 transmits control information of the generated control information, which is not output from its own control information input/output unit 102, to the extension unit 200. The extension unit 200 outputs the control information received from the base unit 100 to the breaker 4 from its own control information input/output unit 202. In the example of Fig. 1, control information to be applied to the breaker 4-1 is output from the base unit 100, control information to be applied to the breaker 4-2 is output from the extension unit 200-1, and control information to be applied to the breaker 4-3 is output from the extension unit 200-2.

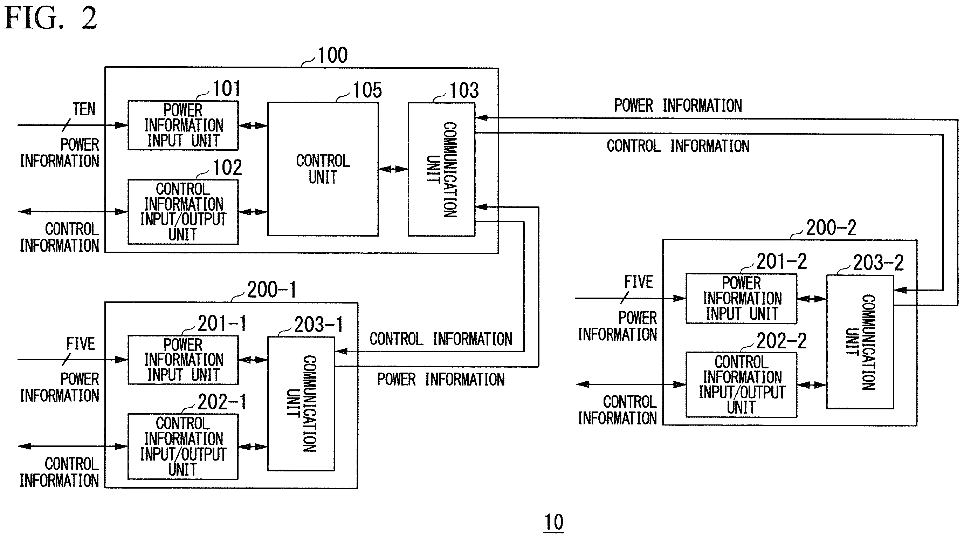

Fig. 2 is a configuration diagram of the protection relay apparatus 10 of the first embodiment. As illustrated in Fig. 2, the base unit 100, for example, has a power information input unit 101 (an example of a first power information input unit), the control information input/output unit 102 (an example of a first control information output unit), a communication unit 103 (an example of a first communication unit), and a control unit 105.

The power information input unit 101 has a plurality of (for example, 10) input terminals. Among the plurality of input terminals, six input terminals receive voltage values and current values for three phases from the instrument conversion unit 5-1 via six signal lines. The remaining four input terminals receive four pieces of information of voltage values and current values for three phases from the instrument conversion unit 5-2 via four signal lines. The power information input unit 101 outputs the power information input thereto to the control unit 105.

The extension unit 200-1, for example, has a power information input unit 201-1 (an example of a second power information input unit), a control information input/output unit 202-1 (an example of a second control information output unit), and a communication unit 203-1 (an example of a second communication unit).

The power information input unit 201-1 has a plurality of (for example, 5) input terminals, and receives two pieces of information of the voltage values and the current values for three phases, which is not input to the power information input unit 101, from the instrument conversion unit 5-2 and three pieces of information of voltage values and current values for three phases from the instrument conversion unit 5-3. The power information input unit 201-1 outputs the input power information to a control unit 205-1.

The extension unit 200-2, for example, has a power information input unit 201-2 (an example of a second power information input unit), a control information input/output unit 202-2 (an example of a second control information output unit), and a communication unit 203-2 (an example of a second communication unit).

The power information input unit 201-2 has a plurality of (for example, 5) input terminals, receives the remaining three pieces of information, which is not input to the power information input unit 201-1, from the instrument conversion unit 5-3, and two input terminals are left unused. The power information input unit 201-2 outputs the input power information to a control unit 205-2. In the following description, when the power information input units 201-1 and 201-2 are not distinguished from each other, they are simply referred to as the "power information input unit 201". Furthermore, when the control information input/output units 202-1 and 202-2 are not distinguished from each other, they are simply referred to as the "control information input/output unit 202". Furthermore, when the communication units 203-1 and 203-2 are not distinguished from each other, they are simply referred to as the "communication unit 203".

Hereinafter, the control information input/output unit of each unit will be described. The control information input/output unit 102 outputs control information for the breaker 4-1 and outputs control information input from the control unit 105 to the breaker 4-1. The control information includes cut-off control information for allowing a breaker 4 in an energized state to be in a cut-off state and energization control information for allowing a breaker 4 in a cut-off state to be in an energized state. Furthermore, the control information input/output unit 102 has an input terminal to which state information (information indicating an energized state or a cut-off state) of the breaker 4-1 is input, and outputs the input state information of the breaker 4-1 to the control unit 105.

The control information input/output unit 202-1 outputs control information for the breaker 4-2 and outputs control information input from the communication unit 203-1 to the breaker 4-2. Furthermore, the control information input/output unit 202-1 has an input terminal to which state information of the breaker 4-2 is input, and outputs the input state information of the breaker 4-2 to the communication unit 203-1.

The control information input/output unit 202-2 outputs control information for the breaker 4-3 and outputs control information input from the communication unit 203-2 to the breaker 4-3. Furthermore, the control information input/output unit 202-2 has an input terminal to which state information of the breaker 4-3 is input, and outputs the input state information of the breaker 4-3 to the communication unit 203-2.

The communication unit 103 communicates with the extension unit 200. The communication unit 103 receives, from the extension unit 200-1, five pieces of power information including the two pieces of power information of the voltage values and the current values for three phases from the instrument conversion unit 5-2 and the three pieces of power information of the voltage values and the current values for three phases from the instrument conversion unit 5-3. Furthermore, the communication unit 103 receives the remaining three pieces of power information of the voltage values and the current values for three phases from the instrument conversion unit 5-3, which is not input to the extension unit 200-1, from the extension unit 200-2. The communication unit 103 outputs the power information received from the extension units 200-1 and 200-2 to the control unit 105. Furthermore, the communication unit 103 transmits a control signal for the breaker 4-2, which is generated by the control unit 105, to the extension unit 200-1, and transmits a control signal for the breaker 4-3, which is generated by the control unit 105, to the extension unit 200-2.

The communication unit 203-1 communicates with the base unit 100. The communication unit 203-1 transmits the power information input from the power information input unit 201-1 to the base unit 100. Furthermore, the communication unit 203-1 receives the control signal for the breaker 4-2 from the base unit 100 and outputs the received control signal to the control information input/output unit 202-1.

The communication unit 203-2 communicates with the base unit 100. The communication unit 203-2 transmits the power information input from the power information input unit 201-2 to the base unit 100. Furthermore, the communication unit 203-2 receives the control signal for the breaker 4-3 from the base unit 100 and outputs the received control signal to the control information input/output unit 202-2.

In addition, communication between the communication unit 103 and the communication unit 203, for example, may be performed by wireless communication with a 400 [MHz] band of a specified small power radio station, a small power data communication system of 2.4 [GHz] band, and the like, or wired communication using an optical fiber cable and the like.

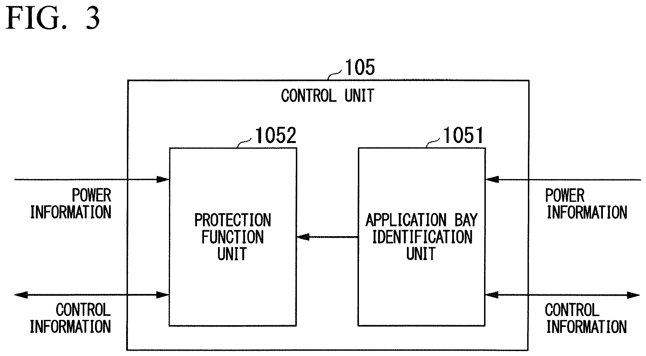

Fig. 3 is a configuration diagram of the control unit 105 in the embodiment. As illustrated in Fig. 3, the control unit 105, for example, has an application bay identification unit 1051 and a protection function unit 1052.

The application bay identification unit 1051 reorganizes the power information, which is input to the power information input unit 101, and the power information, which is received via the communication unit 103 and is input to the extension units 200-1 and 200-2, for each control target (bay). For example, the application bay identification unit 1051 determines which phase voltage value or current value of which breaker 4 corresponds to the power information input to the power information input unit 101, according to an input terminal. Furthermore, for example, power information with identification information (information indicating which phase voltage value or current value of which breaker 4) in accordance with an input terminal is transmitted from the communication unit 203 of the extension unit 200 to the base unit 100. On the basis of the identification information added to the power information, the application bay identification unit 1051 determines which phase voltage value or current value of which breaker 4 corresponds to the power information received from the communication unit 103. Then, the application bay identification unit 1051 extracts power information on the upstream side and the downstream side of the control target (bay), and outputs the extracted power information to the protection function unit 1052.

The protection function unit 1052 generates control information for controlling each breaker 4 on the basis of the power information for each bay input from the application bay identification unit 1051. The protection function unit 1052 receives voltage values and current values for three phases on the upstream side and the downstream side of the control target (bay) from the application bay identification unit 1051. For example, the protection function unit 1052 compares current values in the same phase on the upstream side and the downstream side with each other, and generates a control signal for allowing the breaker 4 on the upstream side to be in a cut-off state for example when a difference between the compared current values exceeds a preset threshold value.

When the difference between the current values on the upstream side and the downstream side is large, it is considered that some abnormality (for example, lightning strike and the like) has occurred in a power transmission section between the upstream side and the downstream side. When some abnormality has occurred in the power transmission section, the breaker 4 on the upstream side of the power transmission section is allowed to be in a cut-off state, so that the location where the accident has occurred is disconnected from the power system 1 and thus it is possible to prevent the accident from spreading to other sections in the power transmission line SL. In addition, in the power transmission section in which the abnormality has occurred, the protection function unit 1052 may allow only the breaker 4 on the upstream side of the power transmission section to be in a cut-off state, or allow the breakers 4 on the upstream side and the downstream side to be in a cut-off state. Furthermore, the protection function unit 1052 may allow only a phase in which the abnormality has occurred to be in a cut-off state, or allow all the three phases in the power transmission section in which the abnormality has occurred to be in a cut-off state. In the above description, current values are compared; however, in addition to the current values or instead of the current values, voltage values may be used.

Furthermore, when the control information input from the protection function unit 1052 is the control information for the breaker 4-1, the application bay identification unit 1051 outputs the control information to the control information input/output unit 102. Furthermore, when the control information input from the protection function unit 1052 is the control information for the breaker 4-2, the application bay identification unit 1051 outputs the control information to the communication unit 103 and transmit the control information to the extension unit 200-1. Furthermore, when the control information input from the protection function unit 1052 is the control information for the breaker 4-3, the application bay identification unit 1051 outputs the control information to the communication unit 103 and output a control signal to the extension unit 200-2.

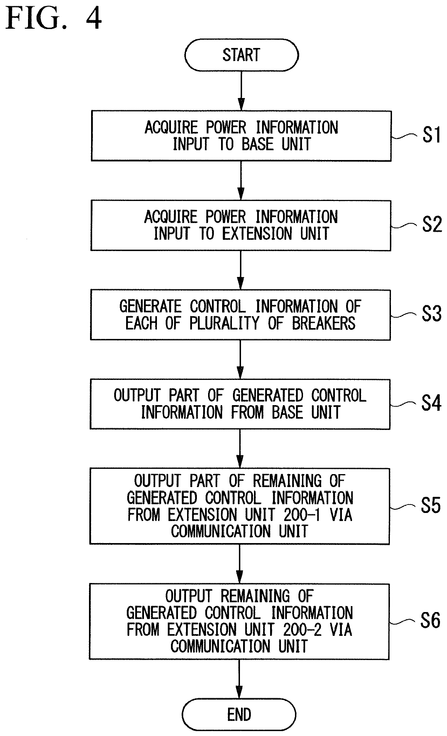

Fig. 4 is an example of a flowchart illustrating the flow of processing performed by the control unit 105 of the embodiment. Firstly, the control unit 105 acquires power information input to the power information input unit 101 (Step S1). Furthermore, the control unit 105 acquires power information input to the power information input unit 201 via the communication unit 103 (Step S2). In this way, the control unit 105 acquires power information required for generating a control signal for each of the plurality of breakers 4. On the basis of the acquired power information, the control unit 105 detects power information which is used for generating the control signal of each of the plurality of breakers 4 which are control targets, and generates the control signals by using the detected power information (Step S3). Then, the control unit 105 outputs the control signal for the breaker 4-1, which is to be output from the control information input/output unit 102, to the control information input/output unit 102. Then, the control signal for the breaker 4-1 input to the control information input/output unit 102 is output from the control information input/output unit 102 to the breaker 4-1 (Step S4). Furthermore, the control unit 105 outputs the control signal for the breaker 4-2, which is to be output from the control information input/output unit 202-1, to the communication unit 103. The communication unit 103 transmits the control signal for the breaker 4-2 to the communication unit 203-1. Then, the control signal for the breaker 4-2 received in the communication unit 203-1 is output from the control information input/output unit 202-1 to the breaker 4-2 (Step S5). Furthermore, the control unit 105 outputs the control signal for the breaker 4-3, which is to be output from the control information input/output unit 202-2, to the communication unit 103. The communication unit 103 transmits the control signal for the breaker 4-3 to the communication unit 203-2. Then, the control signal for the breaker 4-3 received in the communication unit 203-2 is output from the control information input/output unit 202-2 to the breaker 4-3 (Step S6).

The transformer facility in the power transmission line SL has a disconnecting switch (not illustrated) in addition to the breaker 4. The disconnecting switch is a switch that is provided on the power transmission line SL to allow electrical connection at a location where the disconnecting switch is provided to be in an energized state or a cut-off state. The disconnecting switch is not able to open or close the switch in a state in which a power transmission current is flowing through the power transmission line SL as with the breaker 4, and is used for setting a power transmission stop section, for example, in inspection, construction and the like of the transformer facility such as the breaker 4. The disconnecting switch is controlled by the protection relay apparatus 10, similarly to the breaker 4.

As described above, in the protection relay apparatus 10 of the first embodiment, even when power information required for generating a control signal corresponding to a certain breaker 4 is separately input to the base unit 100 and the extension unit 200, required power information can be aggregated in the control unit 105 via the communication unit 103 and the communication unit 203. Furthermore, on the basis of the aggregated power information, the control unit 105 generates a control signal for each of the plurality of breakers 4, and transmits the control signal to a unit which is an output source of the control signal by inter-unit communication. In this way, the protection relay apparatus 10 of the present embodiment can control the breaker by monitoring the power transmission facility in an integrated manner.

Since the related protection relay apparatus does not have a function of communicating between units, when a certain breaker is to be controlled, all power information used to generate control information needs to be input to the same unit. Therefore, since the related protection relay apparatus needs to have a sufficient number of input terminals in each unit and there are unused input terminals, there are cases where it is not possible to efficiently use the apparatus. If the number of input terminals is set according to the number of power information to be input, such problems do not occur. However, it is necessary to design hardware of the apparatus for each site and it is difficult to cope with increase and decrease of the power information to be input. In contrast, the protection relay apparatus 10 of the present embodiment performs transmission/reception of power information by inter-unit communication, so that it is possible to efficiently use input terminals in each unit. That is, the protection relay apparatus 10 of the present embodiment can be virtually regarded as a group of input terminals and the output terminals of the plurality of instrument conversion units 5 can be packed and connected to a plurality of input terminals, which can be used without waste, in order from ends, so that it is possible to efficiently operate the apparatus.

### (Second embodiment)

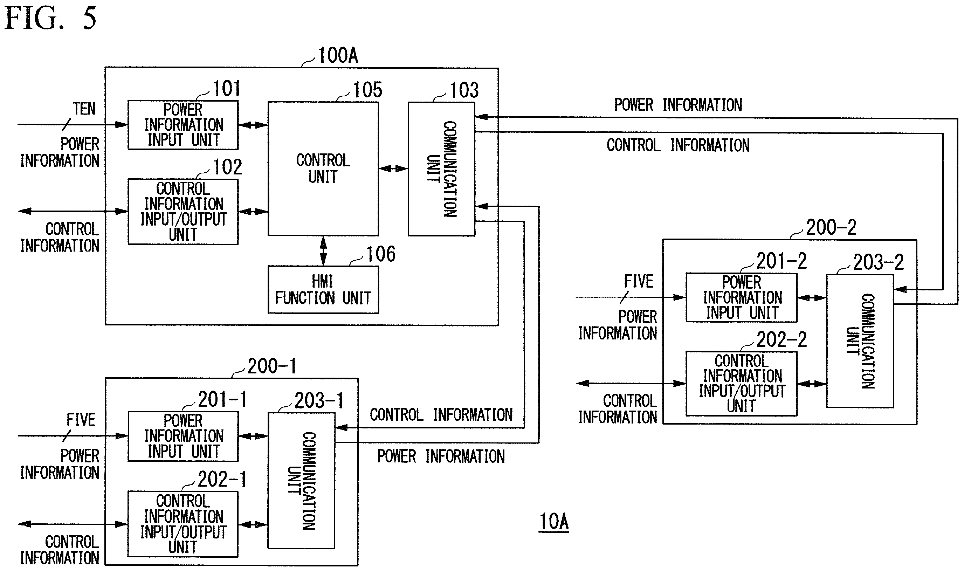

Next, a second embodiment will be described. Fig. 5 is a configuration diagram of a protection relay apparatus 10A of the second embodiment. In the following description, the same elements as those of the first embodiment are denoted by the same reference numerals and a description thereof will be omitted. In the protection relay apparatus 10A of the second embodiment, a human machine interface (HMI) function unit 106 (an example of an input/output unit) is added to a base unit 100A. The HMI function unit 106 has a display unit for displaying power information input to the base unit 100A and the extension unit 200. Furthermore, the HMI function unit 106 has an input unit for receiving setting by a user, such as a control reference which is used when the control unit 105 generates a control signal. The control reference, for example, is a threshold value which is used when performing determination that the breaker 4 is in a cut-off state. When a user makes setting for the HMI function unit 106, the control unit 105 generates control information for the breaker 4 by using the control reference set by the user.

As described above, according to the protection relay apparatus 10A of the second embodiment, a worker and the like can set a setting value required for generating control information via the HMI function unit 106, in addition to the same effect as that of the first embodiment. Furthermore, since only the base unit 100A has the HMI function unit 106, it is not necessary to set similar setting values in each of the base unit 100A and the extension unit 200 one by one, so that it is possible to collectively set setting values to the control unit 105.

### (Third embodiment)

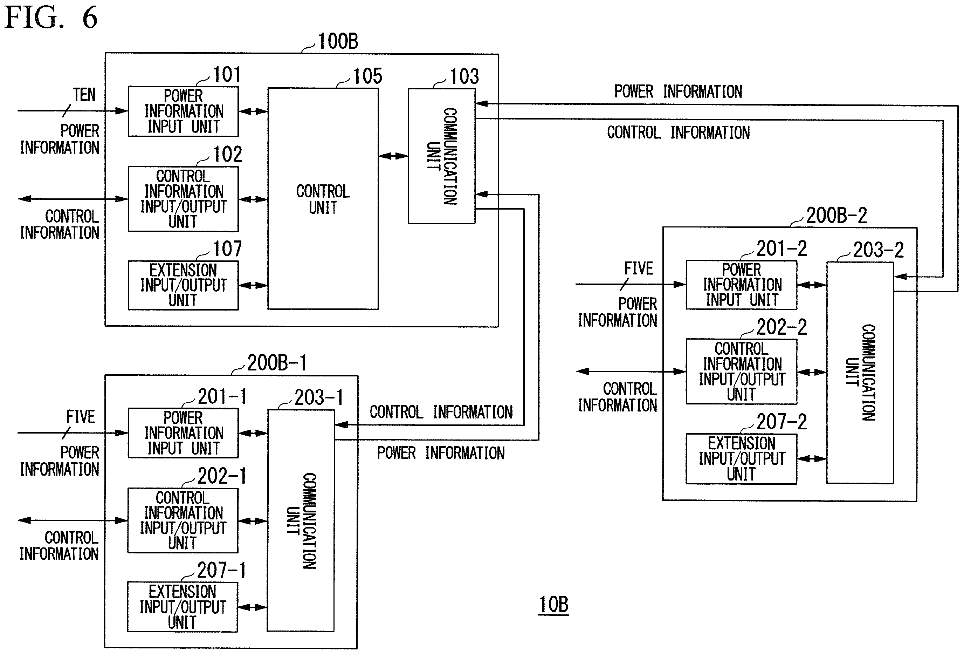

Next, a third embodiment will be described. Fig. 6 is a configuration diagram of a protection relay apparatus 10B of the third embodiment. In the following description, the same elements as those of the first embodiment are denoted by the same reference numerals and a description thereof will be omitted. In the protection relay apparatus 10B of the third embodiment, an extension input/output unit 107 is added to a base unit 100B, an extension input/output unit 207-1 is added to an extension unit 200B-1, and an extension input/output unit 207-2 is added to an extension unit 200B-2. In the following description, when the extension input/output unit 207-1 and the extension input/output unit 207-2 are not distinguished from each other, they are simply referred to as the "extension input/output unit 207". In addition, in the third embodiment, all units included in the protection relay apparatus 10B do not need to have the extension input/output unit 107 or 207 and it is sufficient if at least one unit included in the protection relay apparatus 10B includes the extension input/output unit.

The extension input/output unit 107, for example, has a plurality of terminals. The terminals of the extension input/output unit 107 are common terminals which may serve as input terminals or output terminals. Setting information, which indicates that each terminal included in the extension input/output unit 107 serves as the input terminal or the output terminal, for example, is stored in a storage unit (not illustrated) of the control unit 105. In addition, the extension input/output unit 107 may be incorporated into the unit in advance, or may be an external circuit and the like that are separate from the unit and can be connected to the unit as needed.

When the terminals of the extension input/output unit 107 serve as the input terminals, the extension input/output unit 107 outputs information input to the input terminals to the control unit 105. Furthermore, when the terminals of the extension input/output unit 107 serve as the output terminals, the extension input/output unit 107 outputs information, which is input from the control unit 105 and is to be output from the output terminals, from the output terminals.

The function of the extension input/output unit 207 is similar to that of the extension input/output unit 107.

As described above, according to the protection relay apparatus 10B of the third embodiment, it is possible to flexibly cope with a change in the role of each unit, in addition to the same effect as that of the first embodiment.

### (Fourth embodiment)

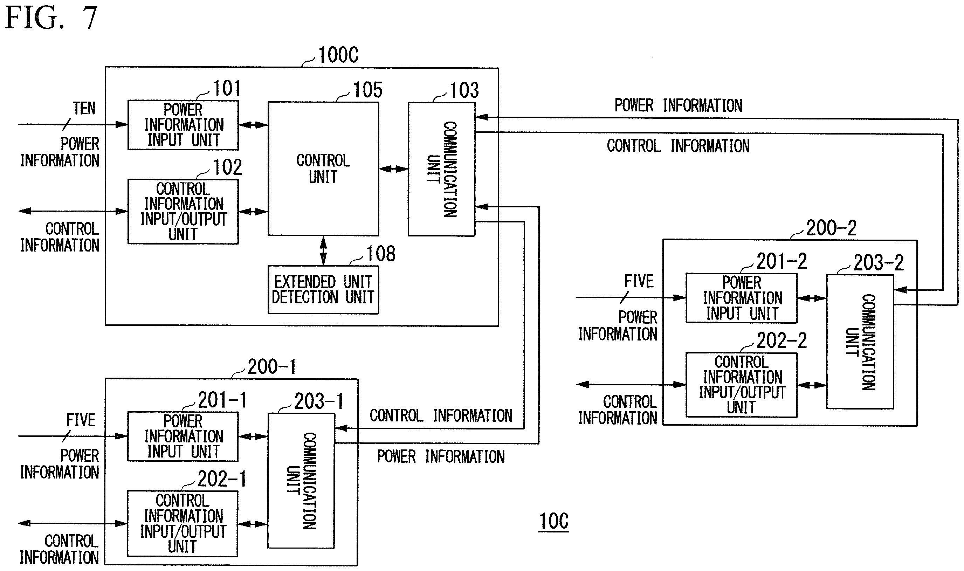

Next, a fourth embodiment will be described. Fig. 7 is a configuration diagram of a protection relay apparatus 10C of the fourth embodiment. In the following description, the same elements as the aforementioned elements are denoted by the same reference numerals and a description thereof will be omitted. In the protection relay apparatus 10C of the fourth embodiment, an extended unit detection unit 108 is added to a base unit 100C.

The extended unit detection unit 108 detects the number of extension units 200 in the protection relay apparatus 10 on the basis of information received by the communication unit 103. For example, a unique address is set in each of the extension units 200 in advance. Each of the extension units 200 adds the unique address to information such as power information and transmits the information to the base unit 100C. By so doing, the extended unit detection unit 108 receives the information added with the unique addresses of the extension units 200 via the communication unit 203 and the communication unit 103. In this way, the extended unit detection unit 108 can detect an extension unit 200 that has transmitted the information received by the communication unit 103, and even when an extension unit 200 is installed additionally in the protection relay apparatus 10, the extended unit detection unit 108 can detect the extended extension unit 200. The extended unit detection unit 108 outputs information on the detected extension unit 200 installed additionally to the control unit 105.

As described above, according to the protection relay apparatus 10C of the fourth embodiment, even when an extension unit 200 is installed additionally, it is possible to automatically detect (plug and play) the extension unit 200 installed additionally without any special initial setting and the like, in addition to the same effect as that of the first embodiment.

### (Modification example of fourth embodiment)

According to a modification example of the fourth embodiment, when the externally attachable extension input/output unit 107 in the third embodiment is connected to the unit, the extended unit detection unit 108 may detect the specifications such as the number and configuration of the input/output terminals of the connected extension input/output unit 107 and the voltage range of input/output signals, and the like. In this way, even when the extension input/output unit 107 is connected in the unit, the protection relay apparatus 10 of the present embodiment can automatically detect (plug and play) the connected extension input/output unit 107 without any special initial setting and the like.

### (Fifth embodiment)

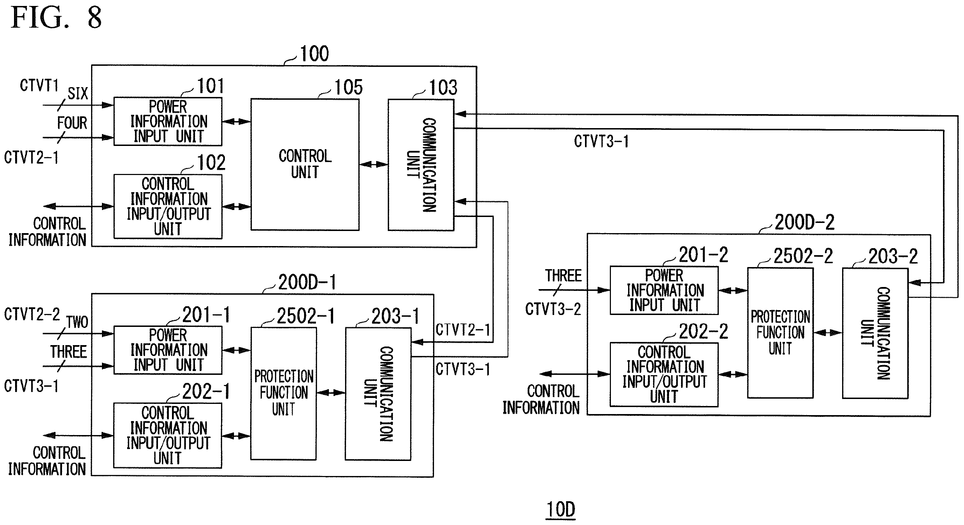

Next, a fifth embodiment will be described. Fig. 8 is a diagram for explaining a protection relay apparatus 10D of the fifth embodiment. In the following description, the same elements as the aforementioned elements are denoted by the same reference numerals and a description thereof will be omitted. In the protection relay apparatus 10D of the fifth embodiment, a protection function unit 2502-1 is added to an extension unit 200D-1 and a protection function unit 2502-2 is added to an extension unit 200D-2. In the following description, when the protection function unit 2502-1 and the protection function unit 2502-2 are not distinguished from each other, they are simply referred to as the "protection function unit 2502". In addition, all the extension units 200D in the protection relay apparatus 10D may not have the protection function unit 2502 and it is sufficient if at least one extension unit 200D of the protection relay apparatus 10D has the protection function unit 2502.

In the fifth embodiment, the protection function unit 2502 generates a control signal to be output from its own extension unit 200D. Therefore, in the fifth embodiment, no control information is transmitted/received between units. In the fifth embodiment, power information CTVT required when the protection function unit 2502 generates control information is transmitted/received between the units.

The protection function unit 2502-1, for example, generates control information for the breaker 4-2 on the basis of a voltage value and a current value measured by the instrument conversion unit 5-2 corresponding to the breaker 4-2. Power information CTVT2-2, which is a part of the voltage value and the current value measured by the instrument conversion unit 5-2, is input to the power information input unit 201-1. However, remaining power information CTVT2-1 is input to the power information input unit 101. Therefore, the protection function unit 2502-1 acquires the power information CTVT2-1 from the base unit 100 via the communication unit 203-1. In this way, the protection function unit 2502-1 can acquire the power information CTVT2-1 and CTVT2-2 required for generating the control information of the breaker 4-2, and can generate the control information for the breaker 4-2 on the basis of the acquired power information CTVT2-1 and CTVT2-2.

The protection function unit 2502-2, for example, generates control information for the breaker 4-3 on the basis of a voltage value and a current value measured by the instrument conversion unit 5-3 corresponding to the breaker 4-3. Power information CTVT3-2, which is a part of the voltage value and the current value measured by the instrument conversion unit 5-3, is input to the power information input unit 201-2. However, remaining power information CTVT3-1 is input to the power information input unit 201-1. Therefore, the protection function unit 2502-1 acquires the power information CTVT3-1 input to the extension unit 200D-1 via the base unit 100. In this way, the protection function unit 2502-2 can acquire the power information CTVT3-1 and CTVT3-2 required for generating the control information of the breaker 4-3, and can generate the control information for the breaker 4-3 on the basis of the acquired power information CTVT3-1 and CTVT3-2.

As described above, according to the protection relay apparatus 10D of the fifth embodiment, the protection function unit 2502 of the extension unit 200D generates the control information for the breaker 4, which is connected to the protection function unit 2502, on the basis of the power information from the power information input unit 201 of its own extension unit 200D and power information received by the communication unit 203 from other units. In this way, as compared with the first embodiment, although there is a cost for providing the protection function unit 2502, it is possible to reduce a load of inter-unit communication.

So far, according to the aforementioned at least one embodiment, even when power information required for generating a control signal corresponding to a certain breaker 4 is separately input to the base unit 100 and the extension unit 200, required power information can be aggregated in the control unit 105 via the communication unit 103 and the communication unit 203. On the basis of the aggregated power information, the control unit 105 generates a control signal for each of the plurality of breakers 4, and transmits the control signal to a unit which is an output source of the control signal by inter-unit communication. In this way, it is possible to control the breaker by monitoring the power transmission facility in an integrated manner.

While certain embodiments of the invention have been described, these embodiments have been presented by way of examples only and are not intended to limit the scope of the invention. Indeed, these embodiments described herein can be embodied in a variety of other forms; furthermore, various omissions, substitutions, and modifications can be made without departing from the spirit of the present invention. The accompanying claims and their equivalents are intended to cover such forms or modifications as would fall within the scope and spirit of the invention.

### [Reference Signs List]

10, 10A to 10D Protection relay apparatus
100, 100A to 100C Base unit
200, 200B, 200D Extension unit
101, 201 Power information input unit
102, 202 Control information input/output unit
103, 203 Communication unit
105 Control unit
106 HMI function unit
107 Extension input/output unit
108 Extended unit detection unit
1051 Application bay identification unit
1052 Protection function unit

## Claims

1. A protection relay apparatus, which includes a first unit and a second unit and controls each of a plurality of breakers provided in a plurality of locations in a power transmission facility for transmitting power, wherein
the first unit comprises:
a first power information input unit configured to receive power information on power measured by a measuring unit mounted at a location corresponding to at least a part of the plurality of breakers;
a control unit configured to generate control information for each of the plurality of breakers;
a first control information output unit configured to output first control information for a first breaker included in the plurality of breakers among the control information to the first breaker; and
a first communication unit configured to communicate with the second unit,
the second unit comprises:
a second power information input unit configured to receive power information on power measured by a measuring unit mounted at a location corresponding to at least another part of the plurality of breakers;
a second control information output unit configured to output second control information for a second breaker included in the plurality of breakers and different from the first breaker among the control information to the second breaker; and
a second communication unit configured to communicate with the first unit and transmit the power information input to the second power information input unit to the first unit,
wherein the control unit of the first unit generates the first control information, which is output to the first control information output unit, and outputs the first control information to the first control information output unit on the basis of the power information input to the first power information input unit and the power information received by the first communication unit, generates the second control information, which is output to the second control information output unit, and transmits the second control information to the second unit by using the first communication unit.

2. The protection relay apparatus according to claim 1, wherein each of the first power information input unit and the second power information input unit includes a plurality of input terminals to which signal lines are connected,
the measuring unit measures a plurality of types of the power information and outputs the power information by the signal line provided for each type of the power information,
a part of the plurality of signal lines from one measuring unit is connected to the input terminals of the first power information input unit, and
another part of the plurality of signal lines from the one measuring unit is connected to the input terminals of the second power information input unit.

3. The protection relay apparatus according to claim 1, wherein the first unit further comprises:
an input/output unit configured to allow an image based on the power information input to the first unit and the second unit to be displayed and to receive a setting operation of a user, and
the control unit generates the first control information or the second control information on the basis of the setting operation of the user performed for the input/output unit.

4. The protection relay apparatus according to claim 1, wherein at least one of the first unit and the second unit comprises:
an extension input/output unit configured to receive information on the measured power and output control information for a breaker to the breaker.

5. The protection relay apparatus according to claim 1, comprising:
a plurality of second units,
wherein the first unit further comprises:
a second unit detection unit configured to detect the number of second units on the basis of information input from the first communication unit.

6. A protection relay apparatus, which includes a first unit and a second unit and controls each of a plurality of breakers provided in a plurality of locations in a power transmission facility for transmitting power, wherein
the first unit comprises:
a first power information input unit configured to receive power information on power measured by a measuring unit mounted at a location corresponding to at least a part of the plurality of breakers;
a control unit configured to generate first control information for a first breaker included in the plurality of breakers;
a first control information output unit configured to output the first control information generated by the control unit to the first breaker; and
a first communication unit configured to communicate with the second unit,
the second unit comprises:
a second power information input unit configured to receive power information on power measured by a measuring unit mounted at a location corresponding to at least another part of the plurality of breakers;
a protection function unit configured to generate second control information for a second breaker included in the plurality of breakers and different from the first breaker; and
a second control information output unit configured to output the second control information generated by the protection function unit to the second breaker; and
a second communication unit configured to communicate with the first unit and receive power information from the first unit, which is not power information input to the second power information input unit among power information used when the protection function unit generates the second control information.
